# EUROPEAN PATENT APPLICATION

(11) **EP 4 439 240 A1**
(43) Date of publication of application: **02.10.2024**
(21) Application number: 23165743.8
(22) Date of filing: 30.03.2023
(51) Int. Cl.: G06F 3/01, G06F 3/03

(54) **EMULATION OF A PHYSICAL INPUT DEVICE FOR TOUCHLESS CONTROL OF A COMPUTER DEVICE**

(71) Applicant: AMERIA AG, 69124 Heidelberg (DE)
(72) Inventor: Seiler, Martin, 79238 Ehrenkirchen (DE); Ensslen, Christian, 70469 Stuttgart (DE); Hixon, Dennis, 74931 Lobbach (DE); Schneider, Franziska, 76275 Ettlingen (DE); Rothvoss Buchheimer, Maria, 69214 Eppelheim (DE)
(74) Representative: Best, Bastian

(57) **Abstract**

According to a first aspect of the present invention, a computer-implemented method for emulation of a physical input device for touchless control of an electronic device, in particular a computer device, is provided. The electronic device, in particular computer device, may comprise and/or may be communicatively coupled to sensor means. The sensor means may be configured for observing an interaction space. In the interaction space, user interaction may be intended to occur for controlling the electronic device, in particular computer device. The method may comprise determining, based at least partially on sensor data captured using the sensor means, at least one characteristic of a user's hand while the user mimics use of a physical input device at least partially within the interaction space. The method may comprise generating at least one control command that corresponds to an input command that would have been generated if the user would have used the physical input device.

## Description

### TECHNICAL FIELD

The present invention generally relates to techniques for touchless user interface control, and more particularly to touchless control of a computer device. One application of the disclosed techniques includes moving a pointer, such as a mouse pointer, in accordance with movement of a user's hand without the need for a physical computer mouse, thereby providing a particularly efficient and convenient user experience.

### BACKGROUND

Electronic devices having a display means, in particular computer devices, have nowadays become omnipresent in various areas of modern life. The display means of such devices is usually designed to provide a Graphical User Interface (GUI) with which a user can interact. Such electronic devices have become smaller and more portable over time. Laptops or tablet computers, for example, are highly portable and can be easily used on the go. Further, the usage scenarios of such devices have steadily increased. For example, most recently due to increasing digitization in the wake of the Covid-19 pandemic, said electronic devices are progressively replacing paper documents which resulted in a significant increase in demand for such devices. Thus, electronic devices, as described above, are used in various situations, for example for gathering desired information by an online search, web browsing, reading e-books, reading newspapers, using applications which support the user in private or professional matters, communicating with other persons using text messengers and/or video conferencing tools and/or voice messaging tools and/or calling tools, or the like. Said electronic devices may also be connected to other, in particular larger, display screens, such as television screens in order to do presentations, lectures or the like. Examples for electronic devices include computer devices, portable computers, convertible computers, laptops, netbooks, tablet devices, mobile devices, or the like.

For providing a user with a user interface to interact and/or control said electronic devices, various input options are available which are usually based on physical input devices. On the one hand, said physical input devices may be built-in physical input devices, such as physical buttons, a keyboard, volume button(s), on-off button(s), or the like. On the other hand, said electronic devices may comprise interfaces for wireless an/or wired connection of physical input devices which are capable to provide signals to the electronic device upon usage by a user causing the electronic device to perform intended actions. Examples for such, so to say, external physical input devices, include: a standard computer mouse, an input stylus, a trackpad, a trackball, a joystick, or the like. All said physical input devices are essentially used by a user's hand.

In any of the above-mentioned applications of said electronic devices it may happen that the interaction using said physical input devices is not comfortable and/or has disadvantages. For example, external physical input devices must be taken along with the electronic device when travelling. It may easily happen that such external devices are forgotten or intentionally not used in order to save space in the suitcase, whereby the user experience while using the electronic device suffers. The main solution available for this, is using a touchscreen or a different built-in physical input device. For example, for replacing an external mouse, a touchscreen or a built-in touchpad may be used, whereby being less comfortable during usage. In particular, a touchscreen may not be the preferred physical input device for many users since the way how the electronic device is controlled, significantly differs compared to using an external mouse. Other existing solutions replacing physical input devices are mainly voice based interaction schemes but do not satisfy the desire to have an intuitive and accessible user interface to provide user input to an electronic device.

US 8,907,894 B2 discloses A touchless input device for a computer replacing a computer mouse which does not require physical contact between the user and any part of the input device. The touchless input device uses multiple, linear near infrared, optical sensors and multiple near infrared light emitters working in a plane in space, all held inside a frame with an opening that defines the detection region. The device images the plane and processes the images to determine the presence, location and velocity of objects in the plane. The operator introduces an object, such as a finger, into the plane and moves the object in the plane to emulate the motion of a computer mouse across a desktop. Mouse buttons and other functions are emulated by unique motions in the plane. The device communicates these motions and events to the computer typically using a Universal Serial Bus.

US 2015/0277566 A1 discloses an information handling system including a camera mounted in the side edge surface for detecting gestures by a user in a gesture detecting zone next to the system and including a gesture detection system for interpreting free space gestures and initializing cursor control commands.

US 2021/0271328 A1 discloses an electronic device including a sensor. and a processor. The sensor is configured to detect a movement of a hand of a user controlling a virtual input device. The processor is communicatively coupled to the sensor. The processor is configured to translate the movement of the hand of the user detected by the sensor into a control input to the electronic device and to execute control the control input.

In view of the above, there is a need to provide a method that fulfills at least partially the requirements of accessibility, ease of use and convenience of use, at the same time providing a user person with a positive user experience.

It is therefore the technical problem underlying the present invention to provide an improved user interface for controlling electronic devices, thereby overcoming the above-mentioned disadvantages of the prior art at least in part.

### SUMMARY OF INVENTION

The problem is solved by the subject-matter defined in the independent claims. Advantageous modifications of embodiments of the invention are defined in the dependent claims as well as in the description and the figures.

According to a first aspect of the present invention, a method for emulation of a physical input device for touchless control of an electronic device, in particular a computer device, is provided. The method may be a computer-implemented method. The electronic device, in particular computer device, may comprise and/or may be communicatively coupled to sensor means. The sensor means may be configured for observing an interaction space. In the interaction space, user interaction may be intended to occur for controlling the electronic device, in particular computer device. The method may comprise determining, based at least partially on sensor data captured using the sensor means, at least one characteristic of a user's hand while the user mimics use of a physical input device at least partially within the interaction space. The method may comprise generating at least one control command that corresponds to an input command that would have been generated if the user would have used the physical input device, at least based on the st least one determined characteristic of the user's hand.

The method according to the present invention is highly advantageous providing an ability to replace traditional computer interfaces such as mouses and touchscreens. This technology enables users to interact with computers without touching any physical objects, using only hand and body gestures. Advantages of emulating and thus replacing a physical input device with touchless gesture control according to the present invention are, among others, the following:
- Less hardware to carry while still maintaining a good user experience: Touchless gesture control technology allows users to interact with their computers without the need for an additional physical device like a mouse. This means that users can enjoy the benefits of a mouse-based interface without the need to carry an additional piece of hardware, making it more convenient and portable.
- Very intuitive and easy to learn: Interacting based on a method according to the present invention is very intuitive and easy to learn, requiring minimal training or prior experience. This makes it an ideal interface for beginners or users who are not experienced with touchless gesture control only having experiences in using a traditional mouse.
- No need to carry a battery in case if the input device lacks energy: Unlike a traditional wireless mouse that require batteries or regular charging, the method according to the present invention does not require any additional power source. This means that users do not need to carry extra batteries or worry about their input device running out of energy while in use.
- No cleaning of a separate device: Using the method according to the present invention, users do not need to clean a separate input device like a mouse. This can save time and effort, particularly in environments where cleanliness has a high priority.
- Combination of different input devices possible with easy switching between input modes: The method according to the present invention facilitates combining the functionalities of various input devices, such as a mouse, a trackpad, a touchscreen, an input stylus, or the like. Thus, it provides users with a more versatile and customizable interface. Accordingly, users may switch between different input modes with ease, depending on their needs or preferences. For example, users can switch between a mouse emulation mode emulating a mouse and a gesture control mode emulating a touchscreen, stylus or the like.
- Improved ergonomics: Using a traditional mouse having a predetermined shape for extended periods can cause discomfort and repetitive stress injuries. The method according to the present invention allows users to interact with their electronic devices in a more natural and ergonomic way, reducing the risk of injury and increasing comfort. The user may, e.g., decide whether he would like to position the hand horizontally like when using a traditional mouse or vertically like when using an ergonomic vertical mouse.
- Enhanced precision: The method according to the present invention enables users to control their electronic devices with greater precision and accuracy than traditional, e.g., mouse-based interfaces. This is particularly true for tasks that require fine motor skills, such as graphic design or video editing, where small movements can make a big difference in the final product.
- Hygiene: In particular touchscreens, but also any other physical input devices, are known to be germ hotspots, particularly in public places. The method according to the present invention eliminates the need for physical contact with the screen, reducing the risk of transmission of germs and bacteria.
- Improved durability: Physical input devices may be vulnerable to damages, scratches and other types of defects. The method according to the present invention eliminates the need for physical contact with the screen, reducing the risk of damage and increasing the lifespan of the device.
- Greater flexibility: The method according to the present invention enables users to interact with their electronic devices from a greater distance, providing greater flexibility in how and where they use their electronic devices.

An electronic device may be understood as a tool or apparatus that relies on electronic components to operate. In this context, an electronic component is any part that uses electrical signals to perform a specific function. A computer device is one type of electronic device, in particular being an electronic device that is specifically designed to execute various computing tasks.

Computer devices may come in many forms, including desktop computers, laptops, tablets, and smartphones. Also, other types of devices such as television sets, in particular so-called smart TVs, set-top-boxes and gaming devices, also referred to as gaming consoles, are examples of computer devices. Furthermore, any type of other physical apparatus with at least some computing functionality may be referred to as a computer device, such as without limitation a computer device which is built into another higher-level electronic device such as a Virtual Reality device, a car, a vehicle and/or the like. Generally speaking, a computer device typically includes at least one central processing unit (CPU), at least one memory component, one or more input/output devices, and possibly various other components.

Said at least one central processing unit (CPU), at least one memory component and one or more input/output devices may function as follows: The CPU may be the central processing unit of the computer device and may be responsible for performing all the instructions and calculations that the device needs to execute. It may be essentially the "brain" of the computer device, and it may interpret and execute commands/instructions provided to it by a user or a device's software. The memory component of a computer device may be responsible for storing data and instructions that are required for the device's operation. This memory may be divided into two categories: temporary and permanent. Temporary memory may be used to store data that is needed only for a short period, while permanent memory may be used for long-term storage. Input/output devices may be used to interact with the computer device. Common input devices include mouses, trackpads, trackpoints, keyboards, tochbars and touchscreens, while common output devices include monitors, speakers, and printers. These devices allow the user to input data and commands into the device and receive output from the device. Various other components may be included in a computer device, such as graphics processing units, network interface cards, and storage devices like hard drives and solid-state drives. These components help to expand the capabilities of the device and allow it to perform more complex tasks. In summary, a computer device is an electronic device that is specifically designed to execute various computing tasks. It comprises components that are necessary for its operation.

A user may interact with said electronic device, in particular with said computer device, using one or more physical input devices, examples of which are provided further below.

A physical input device may be any device that allows a user to input data and/or commands into a computer device or other electronic device. Physical input devices may come in a wide variety of forms for various purposes and use cases. Some examples of a physical input device include a computer mouse, a keyboard, a touchpad, a trackpad, a trackpoint, a joystick, a gaming console controller, a remote control and a touchscreen. Keyboards are typically used to input text and/or commands into a computer device or electronic device. A keyboard may be built-in in the electronic device, particularly computer device, may be an external physical keyboard or may be a virtual keyboard provided, e.g., by way of a projection onto a surface. Computer mice and touchpads are regularly used to move a mouse pointer on a screen and select items, while joysticks are used for gaming and other applications that require precise control.

The term display means includes any means for presenting visual content to a user. This may include a broad range of technologies and formats, including electronic display screens, projection systems, projection surfaces, holographic systems, Augmented Reality devices, Virtual Reality devices, and/or the like.

Electronic display screens are perhaps the most common type of display means in use nowadays. These can include LCD, LED, OLED, Retina, E-Ink and other types of displays, which are used in devices ranging from laptops, smartphones and smartwatches to televisions and large format displays. These screens typically rely on backlighting or other forms of illumination to produce an image and may be capable to offer a wide range of color and resolution capabilities.

Projection systems are another type of display means, which use light to project an image onto a projection surface such as a screen or wall. These can include traditional projectors, as well as newer technologies such as laser projection and digital light processing (DLP). Projection systems are often used in settings such as movie theaters, conference rooms, and large spaces. Projection surfaces may come in various shapes, sizes, and materials, and can be used for a wide range of applications. The most common type of projection surface is a plain, preferably white, wall. It is a simple and inexpensive way to project images, videos, and presentations. Another type of projection surface is a projector screen. Projector screens are designed specifically for projection purposes. They come in various sizes and materials, such as vinyl, fabric, and glass beads. They are often used for applications where a particularly high quality of a projection is desired. Another type of projection surface is a transparent projection surface. Transparent projection surfaces are made of glass or acrylic and are often used for advertising or digital signage. They are common for storefront displays, museums and galleries where a user can see both the projection and an exhibit behind it.

Holographic display means are a type of display means which uses complex optics to produce three-dimensional images that appear to float in space. They may be used for a range of applications, including product visualization, scientific visualization, and entertainment.

Augmented Reality devices and Virtual Reality devices may comprise display means different to each other to create their respective immersive experiences. Augmented Reality devices typically use a transparent display means such as a head-mounted display (HMD) or a smart glass. These display means allow the user to see the real world while overlaying virtual objects on top of it. The virtual objects can be projected onto the transparent display means using various techniques such as beam-splitting, waveguide optics, or holographic displays. The virtual objects are then aligned with the real-world environment in real-time, creating the illusion that the virtual objects are a part of the real world. On the other hand, Virtual Reality devices typically use opaque displays such as a head-mounted display or a projection system. A Virtual Reality device, in particular the display means of a Virtual Reality device, may block out the real world and immerse the user in a virtual environment. The most common type of display means used in Virtual Reality devices is a high-resolution LCD or OLED screen.

The term emulation, in particular emulation of a physical input device, may refer to a process to mimic the functionality of a physical input device, such as a keyboard, mouse, or joystick. This process may include using software, in particular processing software, which processes a provided alternative user input and determines which user input is intended. Generally speaking, emulation software may simulate the behavior of physical input devices by interpreting input or captured signals from other devices and translating that input or signals into an appropriate signal that would be generated by the emulated physical input device.

The term touchless should be understood in relation to the electronic device or computer device. This means that a touchless interaction or a touchless user input does not necessarily mean that the user does not touch any objects or components of the electronic device or computer device in general, but that for the specific desired user interaction or user input, no touching of an input device intended for this purpose is required.

The term user interaction may be understood to include any user input provided by a user person. The user may provide said user input with the intention to cause the electronic device to perform an action and/or to control the electronic device.

The term sensor means may include one or more sensor devices. Groups of the one or more sensor devices may build a sensor array. Thus, an exemplary sensor means may comprise at least two sensor arrays, each sensor array including at least two sensor devices. The sensor devices may be devices capable of capturing sensor data, e.g., imaging data, but may also refer to supporting devices which support other sensor devices in enhancing the precision of capturing sensor data, e.g., an infrared projector. For example, one sensor array may include two infrared cameras and one infrared laser projector, thus the sensor array comprising three sensor devices in total.

The sensor means may in particular be 3D imaging sensor means which include sensor devices that are, alone or in combination with other sensor devices, capable of capturing three-dimensional images of an environment, in particular of objects such as a user's hand. There are several different types of 3D imaging sensor means, including time-of-flight (TOF) sensors, structured light sensors, and stereo vision sensors. TOF sensors work by emitting a light pulse and measuring the time it takes for the light to bounce back from an object, enabling them to create a three-dimensional map of the object's shape and distance. One example for said TOF sensors is a LiDAR sensor. Structured light sensors use a pattern of light and shadow, e.g., a projected pattern projected by a laser projector, and at least one camera to create a three-dimensional map of an object. Stereo vision sensors use at least two cameras to create a three-dimensional image by comparing the images captured by each camera. The cameras may for example be infrared cameras. The projector may for example be an infrared laser projector. Preferably, a projector is configured to emit light having a wavelength which is outside the human visible areas of wavelengths, thus not disturbing the user. Using a projector projecting a pattern generally increases the accuracy of captured sensor data.

The term interaction space may be understood as comprising or being a 3D space in the nearfield of the electronic device in which the user may provide touchless user input. Alternatively or additionally, the term interaction space may be understood as a space within which user interaction is captured. The space may be a space between the user and the electronic device, e.g., when the user faces a display means of the electronic device, the space being located between the user's face and the display means. Generally, the interaction space may be within or equal to the field of view of the sensor means. The interaction space may have a spatial orientation and/or location that is particularly convenient for the user person for providing touchless user input. It may be provided that the user person is provided with a control option to adjust the spatial orientation and/or location of the interaction space.

The term sensor data may be understood to include data collected by the sensor means, in particular captured by the sensor means. The sensor means preferably includes at least one imaging sensor device, as mentioned above, thus in this case, the sensor data includes image data. In a preferred embodiment, the sensor means is configured to capture a 3D image of the environment in the nearfield of the electronic device. The 3D image may be generated based on layering various sensor data from different sensor devices. In particular, the sensor means may include a depth sensor, such as at least one infrared sensor, facilitating creation of the 3D image. Said captured sensor data may be processed by the electronic device, in particular by a processing unit of the electronic device, in order to generate control commands corresponding to the user input lying in the sensor data.

The term characteristic of the user's hand may be understood to include a presence of the user's hand and/or a current position of the user's hand and/or a movement of the user's hand and/or a motion of one or more fingers of the user's hand. For example, if the functionalities of a mouse is emulated, the position and movement of the user's hand may be translated into a pointer position of a pointer, in particular a mouse pointer or user interface pointer, displayed by a display means of the electronic device.

The term mimicking use of a physical input device may be understood in a functional manner. In particular, according to the present invention, it may be assumed that the user already has some more or less complete knowledge about the operation of physical input devices. It may also be assumed that the user already has some habits resulting from the use of such physical input objects in the past. Another assumption is that users would like to keep these habits and change them only to a small extent only if necessary. Thus, it is most intuitive for a user to perform similar movements when interacting with an electronic device as the user would perform with a physical input device. Figuratively speaking, the concept of the present invention may for example be compared to an air guitar where the user mimics the usage of a real guitar according to habits and experiences.

Examples for control commands that correspond to an input command that would have been generated if the user would have used the physical input device are given for the sake of better understanding, as follows:
- move a pointer, in particular a mouse pointer or user interface pointer, displayed by a display means to a desired position (may correspond for example to moving a mouse or hovering over a touchscreen);
- perform a left click (may correspond for example to clicking the left button of a mouse or clicking on a touchscreen);
- perform a right click (may correspond for example to clicking the right button of a mouse or a predetermined touchscreen input);
- perform a double left click (may correspond for example to double clicking the left button of a mouse or double clicking on a touchscreen);
- perform click and hold (may correspond for example to clicking and holding the left button of a mouse or clicking and holding using a touchscreen);
- scroll up (may correspond for example to moving the scrolling wheel of a mouse or to swiping on a touchscreen);
- scroll down (may correspond for example to moving the scrolling wheel of a mouse or to swiping on a touchscreen);
- scroll to the left (may correspond for example to moving the scrolling wheel of a mouse or to swiping on a touchscreen);
- scroll to the right (may correspond for example to moving the scrolling wheel of a mouse or to swiping on a touchscreen);
- perform zoom in (may correspond for example to moving the scrolling wheel while pressing Ctrl-button of a keyboard or to zooming using a touchscreen);
- perform zoom out (may correspond for example to moving the scrolling wheel while pressing Ctrl-button of a keyboard or to zooming using a touchscreen).

It may be provided that the method further comprises observing, using the sensor means, the interaction space being at least partially located at a location where user interaction with a computer mouse normally takes place. Preferably, the interaction space may be located next to a keyboard associated with the computer device. More preferably, the interaction space may be located adjacent and/or at least partially encompassing a virtual plane defined in space.

The step of observing may be performed continuously during usage of the electronic device, in particular of the computer device. Thus, continuously observing the interaction space may be performed.

The virtual plane may be defined corresponding to a physical plane on which a user may use a physical input device, such as a physical mouse. An example for a physical plane is the surface on a desk on which the electronic device is operated by a user person, wherein the virtual plane essentially corresponds to or is defined essentially parallel to the physical plane. The detection of the physical plane may be performed based on standard plane detection, preferably using the sensor means. After detection and definition of the virtual plane, the interaction space may be defined to be next to and/or on top of and/or essentially parallel to the virtual plane. In an example, where the virtual plane is defined based on a physical surface of a desk on which the electronic device is operated, the interaction space may be a cuboid space on said surface. The position of the virtual plane may be captured relative to a known reference object. The reference object may for example be the electronic device itself and/or part of the electronic device and/or the sensor means and/or part of the sensor means.

In order to observe the interaction space, the sensor means may be arranged having fields of view in the proximity of the electronic device, in particular computer device. The interaction space may be at least partially delimited by spatial boundaries which are defined within the fields of view of the sensor means.3 The determined at least one characteristic of the user's hand may include position and/or movement of the user's hand within the interaction space, in particular essentially parallel to a virtual plane defined in space, and/or may include motion of at least one individual finger of the user's hand. The virtual plane may be defined as described above.

The at least one control command may cause emulation of at least one mouse-functionality based at least partially on the position and/or movement and/or motion. The step of generating the at least one control command may be performed in a mouse emulation mode.

Position and/or movement of the user's hand within the interaction space essentially parallel to the virtual plane may correspond to the position and movement of the user's hand on a desk during operating an electronic device, in particular computer device. Positioning and moving may be performed by the user analogously to positioning and moving of a traditional computer mouse.

Motion of individual fingers of the user's hand may be understood as motion of at least one of the fingers of the user's hand. In particular, the thumb, the index finger and/or the middle finger may be relevant to determine, e.g., click input.

It may be provided that emulation of at least one mouse-functionality includes manipulating a position of a pointer, in particular a mouse pointer or user interface pointer, on a displayed scene. The position and/or movement of the displayed pointer may depend on the determined position and/or movement of the user's hand essentially parallel to the virtual plane. The method may comprise executing a click operation, in particular depending on the determined motion of at least one individual finger of the user's hand. The method may comprise executing a scroll operation depending on the determined position and/or movement of the user's hand essentially parallel to the virtual plane and/or depending on the determined motion of at least one individual finger of the user's hand. The method may comprise executing a swipe operation depending on the determined position and/or movement of the user's hand essentially parallel to the virtual plane and/or depending on the determined motion of at least one individual finger of the user's hand.

Said movement of the user's hand may include a velocity and/or acceleration of the user's hand. Thus, manipulation and/or scroll operation and/or swipe operation of the pointer may be performed depending on the velocity and/or acceleration of the user's hand when moving. In a first example, if a user's hand is moved with a high velocity, the movement of the pointer may also be moved with a high velocity. In a second example, if the user's hand is moved with a high acceleration, a correspondingly fast scroll or swipe operation may be performed.

The position of the pointer may a position as displayed on a displayed scene, i.e., relative to the displayed scene. A click operation may include any type of click, e.g., a right click, a left click, double left clicks, double right clicks, a click and hold, and/or the like.

Scrolling and swiping are two commonly used interactions in modern computing devices. Scrolling refers to the action of moving content up or down within a fixed window or viewport. This action is traditionally achieved by using a mouse wheel, a touchpad, or a touchscreen. Swiping, on the other hand, refers to an action of moving content left or right within a fixed window or viewport. This action is typically achieved by using a touchscreen or by using modern mouse wheels. While both scrolling and swiping involve moving content within a viewport, they differ in the direction of movement. Thus, a scroll operation, as mentioned above, may include scrolling a displayed scene in an essentially vertical direction, e.g., scrolling up, scrolling down. A swipe operation, as mentioned above, may include swiping a displayed scene in an essentially horizontal direction. A combination of a scrolling operation and a swiping operation may enable moving a displayed scene in any direction desired by the user.

The term mouse emulation mode and correspondingly the term emulation of at least one mouse-functionality refer to the replacement of any functions provided by a traditional computer mouse. Mouse functionalities generally refer to the range of actions that can be performed using a computer mouse, wherein the mouse is, as described above, a physical input device that is commonly used to control the position and/or movement of a mouse pointer displayed by a display means, and to select and manipulate on-screen objects. Thus, the mouse is an essential tool for navigating and interacting with modern graphical user interfaces and has a wide range of functionalities that can be customized to meet individual user needs.

One of the primary functions of the mouse is to control the movement of a mouse pointer displayed by a display means. This is, when using a traditional physical mouse, achieved by moving the mouse across a surface, which translates into movement of the pointer on the display. The pointer can be used to point to and select on-screen objects such as icons, buttons, and text. The mouse can also be used to drag and drop objects, resize windows, and scroll through documents. Another important functionality of a mouse is the ability to perform various types of clicks. The left click is the most common type of click and is used to select and activate on-screen objects. The right click is used to access contextual menus, which provide additional options and functionality related to the selected object. The middle click is less commonly used but can be used to perform specific actions such as opening links in a new tab or closing tabs in a web browser. The scroll wheel is another key component of a mouse which allows users to scroll through long documents or web pages without having to manually click and drag the scroll bar. Many mouses also feature additional buttons that can be customized to perform specific functions, such as navigating back and forward through web pages, opening specific applications or files, or adjusting volume levels. All said functionalities may be emulated by the method according to the present invention in order to greatly enhance the user experience and productivity when working with an electronic device, in particular computer device.

It may be provided that the method further comprises detecting presence of the user's hand within the interaction space and at least one reference attribute and/or reference portion of the user's hand based on the captured sensor data. The method may comprise locking, preferably upon a trigger action of the user, the user's hand based on the at least one reference attribute and/or reference portion, wherein one or more of the following is performed:
- re-detecting the user's hand based on the at least one reference attribute and/or reference portion in order to facilitate further interaction seamlessly in the event that the user removes the hand from the interaction space and reintroduces the hand into the interaction space later on, and/or
- filtering objects in the interaction space that do not correspond to the user's hand, wherein filtering is performed based on the at least one reference attribute and/or reference portion of the user's hand.

The reference attribute and/or reference portion may refer to at least one point of the user's hand and/or a portion of the user's hand and/or the entire user's hand. A reference attribute and/or reference portion may be a unique characteristic of the user's hand. Examples for attributes and/or portions of a user's hand that can be used to distinguish a respective user's hand from other objects and/or other user's hands are the following. These attributes can be used individually or in combination with one another to help distinguish a user's hand from other objects ans/or hands.
- Shape: The shape of a user's hand is unique and can be used to identify it. Factors like the size, width, length, and proportions of the fingers and palm can all contribute to the overall shape of the hand.
- Skin Texture: The texture of a user's hand can be unique to that person. The texture of the skin can be determined by the presence of wrinkles, freckles, scars, and other imperfections.
- Nail shape: The shape and length of the nails can vary from person to person and can thus be used to distinguish a user's hand from another.
- Skin tone: The color and tone of a user's skin can be unique and can help to distinguish a user's hand.
- Vein pattern: The pattern of veins on the back of a user's hand can be unique and can be used for distinguishing.
- Hair on the user's hand: The amount and distribution of hair on a user's hand can be unique to that person.
- Scars or marks: Any scars, birthmarks, or other marks on a user's hand can be used for distinguishing.

The locking functionality is particularly advantageous in terms of smooth and intuitive user experience. During usage and upon locking the user's hand, the user may even temporarily stop using the electronic device or leave the electronic device and continue later on without any interruptions. Locking the user's hand based on the at least one reference attribute and/or portion is advantageous because it is simple to implement and highly reliable. The at least one reference attribute and/or portion may be understood as a unique identifier for the user's hand, thus avoiding a confusion with a different hand or object in the nearfield of the electronic device. Filtering objects may further increase the reliability.

It may be provided the method comprises displaying, using a display means, a visual control aid being visually perceptible by the user. The visual control aid may provide the user with an indication of a position of the user's hand and/or movement of the user's hand and/or motion of at least one finger of the user's hand.

Said visual control aid may provide the user with a clear and easy to understand indication of the position of the user's hand, thus enabling the user to quickly learn how to efficiently interact. On the long run, by providing the user with a visual indication of the hand position, the method can help to improve the accuracy and precision during interaction. However, it may be provided the option to deactivate the visual control aid, e.g., after the user is familiar with the interaction scheme and does not need the visual control aid anymore. Of course, the visual control aid may be activated at any time according to the user's needs. Additionally or alternatively, it may be provided that the visual control aid may have a level of transparency when displayed by the display means, preferably the level of transparency being adjustable by the user. Additionally or alternatively, it may be provided that the position of the visual control aid displayed by the display means may be adjustable by the user. Each of said features make the method according to the present invention particularly adaptable the user's needs and preferences when interacting.

The visual control aid may include a visually perceptible virtual representation of the user's hand, the virtual representation preferably having the shape of a hand. The virtual representation of the user's hand may preferably be a predetermined 3D-illustration of a hand. This is particularly easy to understand also for unexperienced users and therefore provides an intuitive user experience.

The visual control aid may include a visually perceptible virtual representation of the interaction space, wherein an indication of a position of the user's hand and/or movement of the user's hand and/or motion of at least one finger of the user's hand is indicated with respect to the virtual representation of the interaction space. Displaying visually perceptible virtual representation of the interaction space enhances the user experience and enables the user to visually recognize where the interaction space is located.

It may be provided that the method further comprises projecting, using a projector, a visual indication providing the user at least partially with an indication of the position and/or size of the interaction space.

Projecting a visual indication for the user increases enhances the user experience and enables the user to visually recognize where the interaction space is located.

It may be provided that the method comprises recording, using a microphone, voice input of the user person and generating at least one voice-based control command. Said at least one voice-based control command may be related to the emulation of at least one mouse-functionality and/or gesture interaction, and/or the at least one voice-based control command may be supplementary commands facilitating further functionalities of the computer device if combinedly detected with the at least one characteristic, preferably position, movement and motion, of the user's hand.

Voice-based control offers its own unique set of advantages. On the one hand, it allows users to control devices without having to physically move their body or parts of their body at all. This can be particularly useful for people with disabilities or those who have limited mobility. On the other hand, voice-based control also allows for hands-free operation, which can be particularly useful in situations where users need to multitask or have their hands occupied, such as when cooking or working out.

When used together, touchless gesture control and voice-based control can be complementary to each other. For example, users can use voice-based commands to turn on an electronic device or select an option, and then use touchless gestures to fine-tune their selection or make more precise adjustments. This can provide a more seamless and natural user experience providing an extended set of functionalities.

It may be provided that the method further comprises switching, upon detecting a trigger event, in particular performed by the user, into a gesture interaction mode configured to detect free space gestures. The trigger event may be predetermined and/or adjustable by the user. The method may comprise generating, in the gesture interaction mode, at least one control command based on at least one characteristic of the user's hand, preferably based on movement of the user's hand and/or motion of at least one individual finger of the user's hand within the interaction space. The at least one control command may cause the computer device to perform actions associated with the detected free space gestures. The method may comprise switching back to the mouse emulation mode upon a trigger event and/or automatically after expiry of a period of time in which no free space gesture was detected. The period of time may be predetermined and/or adjustable by the user.

A trigger event is any generally any event that causes the electronic device, in particular the computer device, to switch from one mode to another, namely from the mouse emulation mode into a gesture interaction mode. These events may be initiated by the user and/or by the electronic device itself. In the context of gesture interaction, a trigger event could be anything from the user waving their hand in front of the electronic device, to a sound or a motion being detected by the electronic device. Thus, a trigger event may also be a voice input, as described above. The trigger event essentially prompts the electronic device to switch into the gesture interaction mode. This mode is configured to detect free space gestures, which means that the user can interact with the electronic device without the need for any physical contact. Free space gestures can include anything from waving, swiping, and tapping, to more complex gestures like pinching, twisting, and rotating. The sensor means may detect the trigger event. Further, the sensor means may work together with other peripheral devices.

Free space gesture interaction significantly widens up the use cases of the present invention. For example, it can be used in gaming to provide a more immersive experience, or in digital writing while detecting a writing gesture.

The trigger event being adjustable by the user has several advantages over a predetermined trigger event. Firstly, it may improve the user experience by allowing users to personalize the electronic device to their own preferences. For example, a user may prefer to use a specific hand gesture as the trigger event, rather than a predefined gesture. By allowing users to adjust the trigger event, they can choose a gesture that is more natural or comfortable for them, which can make the interaction with the system feel more intuitive. Secondly, adjustable trigger events can also improve accessibility for users with different physical abilities or disabilities. For example, users with limited mobility or dexterity may find it easier to perform certain gestures than others. By allowing them to adjust the trigger event, they can choose a gesture that is more comfortable or feasible for them to perform, which can make the system more accessible. Thirdly, adjustable trigger events can also improve the usability of the system in different contexts or environments. For example, in a noisy environment, a user may prefer to use a trigger event that does not involve a sound or a vocal command, but a hand gesture, or vice versa for quiet environments. Thus, by allowing users to adjust the trigger event, users can choose a trigger event that is more appropriate for the context they are in.

Switching back to the mouse emulation mode upon a trigger event or automatically after expiry of a period of time in which no free space gesture was detected is particularly advantageous for a smooth and reliable user experience. Usually, when interacting with a computer device, the usage of a mouse is the main way of interaction. All other interaction possibilities, except the usage of a keyboard, are often seen as temporal or even optional. For example, a laptop being equipped with a touchscreen may be controlled via the touchscreen but in most of the times, the user will stick to interact using the mouse and/or touchpad and the keyboard instead of the touchscreen. Thus, the mouse plays a key role in user interaction and user experience. As a result, for the present invention, it is very advantageous if switching back to a mouse emulation mode is performed in an easy, reliable and intuitive manner.

It may be provided that gesture classification is performed using a gesture classifier which is executed by the electronic device, in particular the computer device. Gesture classification may include determining the type of a gesture based on a gesture database including at least one of the following gesture types: open or close the start menu, close window, show desktop, open the file explorer, start voice input, lock computer, minimize all windows, maximize window, open settings, open notification center, open calendar, lock device orientation, take a screenshot, toggle between apps on the taskbar, open the screen magnifier, zoom in, zoom out, open specific app.

A gesture classifier is a software program that may be executed by the electronic device and may be responsible for classifying types of gestures performed by the user in order to take appropriate actions based on the type of gesture performed. This classification process may be based on a gesture database that includes a wide range of predefined gesture types, as mentioned above. Said database may be stored locally on the respective electronic device and/or online on a server with which the electronic device communicates.

In one embodiment, the gesture classifier comprises an underlying machine learning model. Suitable machine learning models are based on a convolutional neural network (CNN) or a recurrent neural network (RNN) or a combination thereof. CNNs and RNNs are both types of deep learning algorithms commonly used in machine learning applications, including gesture recognition. A CNN is a type of neural network that is particularly well-suited for image and video recognition tasks.

Generally speaking, a CNN uses convolutional layers to extract features from input data, followed by pooling layers to reduce the dimensionality of the feature maps. The output of the convolutional and pooling layers is then flattened and fed into one or more fully connected layers, which are responsible for making the final classification decision. The main advantage of CNNs is that they can automatically learn hierarchical representations of input data, which makes them very effective at recognizing complex patterns in images and videos. An RNN, on the other hand, is a type of neural network that is particularly well-suited for sequence data, such as time series or natural language. An RNN uses recurrent connections to propagate information from one time step to the next. This enables the network to maintain an internal state or memory of previous inputs, which is useful for tasks such as speech recognition or language translation. The main advantage of RNNs is their ability to capture temporal dependencies in the input data, which makes them very effective at modeling sequential data. One key difference between CNNs and RNNs is that CNNs are designed to operate on fixed-size input data (such as images of a fixed resolution), whereas RNNs can handle variable-length input data (such as sequences of different lengths). Another difference is that CNNs are better suited for tasks that involve spatial information (such as image classification), while RNNs are better suited for tasks that involve temporal information (such as speech recognition). In an embodiment of the present invention, it may be provided to use a combination of both CNNs and RNNs since for video recognition tasks, both spatial and temporal information are important. If the present invention is implemented to work based on sensor data essentially being a video image stream, the combination of CNNs and RNNs are particularly advantageous. A CNN can be used to extract spatial features from each frame of the video, which are then fed into an RNN to model the temporal dependencies between frames.

The machine learning model may be trained using a large dataset of labeled examples, where each example comprises a time series of data points and a corresponding label that indicates the type of gesture being performed. The training data is used to adjust the weights and biases of the model so that it can accurately classify new, unseen examples. The training process typically involves an iterative approach, where the model is presented with a batch of training examples and the weights and biases are adjusted to minimize the difference between the predicted output and the actual label. This process is repeated for many epochs until the model has learned to accurately classify the gestures in the training data.

The type of AI that may be used in this context is typically supervised learning, where the model is trained using a labeled dataset. However, unsupervised learning approaches such as clustering and anomaly detection can also be used in the context of the present invention, e.g., in order to fill in the database as mentioned above.

Thus, gesture classification can also improve the productivity and efficiency of the user, as it allows them to perform certain actions more quickly and easily than using traditional input methods. For example, opening a specific app or taking a screenshot can be achieved with a simple gesture, rather than navigating through menus and clicking buttons.

It may be provided that the sensor means at least includes two cameras of the same type, preferably two 2D-cameras, more preferably two infrared cameras, having an overlapping field of view and preferably being arranged spaced apart from each other. The sensor means may further include an infrared laser projector projecting an infrared laser pattern configured to support the sensor means to capture sensor data, in particular depth information. At least one of the cameras may be oriented to have a field of view being oriented essentially downwards, in particular with respect to the direction of gravity.

In order to create a 3D image of the environment of the electronic device, several options are available, as described above. The term 3D image may, in this sense, be understood broadly, i.e., including any data set which describes a 3D environment. The sensor means may comprise one or more sensor arrays, each sensor array being configured to observe one essential direction of view, e.g., left side and right side of the electronic device during usage by a user facing the electronic device.

In a first example, which may be a stereovision approach, one sensor array may include two infrared cameras. By overlapping and/or mapping the captures sensor data of the two infrared cameras, a 3D image of the environment may be created.

In a second example, which may be a stereovision approach, one sensor array may include two infrared cameras and one infrared projector configured to project an infrared laser pattern. Compared to the first example, the second example has a higher precision due to the infrared laser pattern that is captured by at least one, preferably both, of the infrared cameras.

In a third example, which may be a stereovision approach, one sensor array may include two 2D cameras, e.g., being a standard RGB-camera. By overlapping and/or mapping the captures sensor data of the two infrared cameras, a 3D image of the environment may be created. Compared to the first example, the precision in detecting objects, such as the user's hand, is higher because color information may be used to determine objects. This becomes particularly advantageous if locking of the user's hand, as described above, is provided: The color information may be used, on the one hand, to determine one or more reference point(s) that are unique to the user's hand. On the other hand, a confusion with other objects is avoided more reliably due to the fact that color information may be considered. In a particular embodiment where locking of the user's hand is provided, the color information may be even used instead of a reference point, thus defining the unique color of the user's hand to be the reference for locking the user's hand.

In a fourth example, which may be a stereovision approach, one sensor array may include two 2D cameras, e.g., being a standard RGB-camera, and one projector configured to project a laser pattern. Compared to the third example, the fourth example has a higher precision due to the laser pattern that is captured at least one of the cameras.

In a fifth example, which may be a structured light approach, one sensor array may include one infrared camera and one infrared laser projector configured to project an infrared laser pattern. A 3D image of the environment may be created solely based on sensor data captured by the one infrared camera by taking into account distortions of the infrared laser pattern by the shape of the environment and/or objects in the environment.

In a sixth example, which may be a time-of-flight approach, one sensor array may include a ToF-sensor configured to capture a precise 3D image of the environment based on measurement of time-of-flight of emitted light, as described above.

The sensor means, in a preferred embodiment of the present invention, comprises at least two sensor arrays, wherein one sensor array is arranged in an upper left corner of a display means of a computer device, and one sensor array is arranged in an upper right corner of said display means. The sensor array arranged in the upper left corner may have a field of view essentially oriented to the right, while the sensor array arranged in the upper right corner may have a field of view essentially oriented to the left. In other words: The sensor arrays may each have a field of view essentially diagonally extending over the display means. A more detailed description is provided as follows:
It may be provided that the computer device comprises a display means being configured to display a scene to the user. The sensor means may include at least one, preferably two, sensor device(s), wherein at least one of the at least one sensor device(s) having a field of view extending at least partly across to the display means from a left side to a right side and/or vice versa with respect to at least one orientation of the display means during usage;
   and/or
the sensor means may include at least one, preferably two, sensor device(s), wherein at least one of the at least one sensor device(s) is oriented having a field of view covering at least part of a spatial area in front of the display means, preferably the spatial area being located between the user and the display means;
   and/or
the sensor means may be arranged at or integrated in an edge area of the display means, the sensor means including at least one, preferably two, sensor device(s), wherein at least one of the at least one sensor device(s) is oriented having a field of view covering an opposing part of the display frame.

Said arrangement(s) of sensor means is particularly advantageous for two main reasons. On the one hand, by having a field of view extending at least partly across to the display means from a left side to a right side and/or vice versa with respect to at least one orientation of the display means during usage, the respective fields of view are particularly large, e.g., also covering a space in front of the display means and/or above a surface of a keyboard. This enables observing a large interaction space increasing the variety of options for the user to interact. In particular, the user may interact emulating mouse functionalities, as described above, but also by performing free space gestures, as described above.

On the other hand, the precision and/or quality of captured sensor data when capturing a user's hand while mimicking usage of a computer mouse is increased due to the fact that the sensor means, in particular if a stereovision sensor means is used, may have a minimum distance in which captured sensor data are of less precision. Based on the above-described sensor arrangement, a distance between the sensor means and the observed user's hand is always kept during usage. This distance may ideally be larger than said minimum distance.

According to a second aspect of the present invention, a data processing apparatus, preferably an electronic device, more preferably a computer device, is provided comprising means for carrying out a method according to the first aspect of the present invention.

All technical implementation details and advantages described with respect to the first aspect of the present invention are self-evidently mutatis mutandis applicable for the second aspect of the present invention and vice versa.

According to a third aspect of the present invention, a system is provided. The system may comprise an electronic device, preferably a computer device, configured to receive and process sensor data. The system may comprise sensor means, preferably including at least one sensor device, wherein the sensor means is configured for observing an interaction space in which user interaction is intended to occur for controlling the computer device. The electronic device, preferably a computer device, may comprise and/or may be communicatively coupled to the sensor means. The electronic device, preferably the computer device, may comprise means for and/or may be configured for carrying out a method according to the first aspect of the present invention. In particular, the electronic device, preferably the computer device, may be configured for determining, based at least partially on sensor data captured using the sensor means, at least one characteristic of a user's hand while the user mimics use of a physical input device at least partially within the interaction space; and may be configured for generating at least one control command that corresponds to an input command that would have been generated if the user would have used the physical input device.

The electronic device, preferably the computer device, may comprise one or more of a processor, a non-transitory memory and/or a display means. The electronic device, preferably the computer device, may comprise and/or may be communicatively coupled to a microphone. The electronic device, preferably the computer device, may comprise a folding mechanism. This enhances the durability and robustness of the electronic device, preferably the computer device. The electronic device, preferably the computer device, may comprise and/or may be communicatively coupled to a keyboard. The electronic device, preferably the computer device, may comprise a housing having integrated therein the sensor means.

The sensor means may comprise at least two sensor devices, the at least two sensor devices being cameras of the same type, preferably two 2D-cameras, more preferably two infrared cameras, having an overlapping field of view and preferably being arranged spaced apart from each other, wherein at least one, preferably each, of the sensor devices is oriented to have a field of view being oriented essentially towards a bottom part of a display means of the computer device.

The electronic device, preferably the computer device, may comprise and/or may be communicatively coupled to an infrared laser projector configured to project an infrared laser pattern which is capturable by an infrared camera.

The system may be configured to perform a method according to the first aspect of the present invention.

All technical implementation details and advantages described with respect to the first and second aspects of the present invention are self-evidently mutatis mutandis applicable for the third aspect of the present invention and vice versa.

According to a fourth aspect of the present invention, a sensor means, preferably including at least one sensor device, more preferably including at least two sensor devices, may be provided configured for use in a method according to the first aspect of the present invention and/or in a system according to the third aspect of the present invention.

All technical implementation details and advantages described with respect to the first, second and third aspects of the present invention are self-evidently mutatis mutandis applicable for the fourth aspect of the present invention and vice versa.

According to a fifth aspect of the present invention, the use of a sensor means, preferably according to claim the fourth aspect of the present invention, is provided, in particular in a method according to the first aspect of the present invention.

All technical implementation details and advantages described with respect to the first, second, third and fourth aspects of the present invention are self-evidently mutatis mutandis applicable for the fifth aspect of the present invention and vice versa.

According to a sixth aspect of the present invention, a computer program or a computer-readable medium may be provided, having stored thereon a computer program, the computer program comprising instructions which, when the program is executed by a computer, cause the computer to carry out a method according to the first aspect of the present invention.

All technical implementation details and advantages described with respect to the first, second, third, fourth and fifth aspects of the present invention are self-evidently mutatis mutandis applicable for the sixth aspect of the present invention and vice versa.

### BRIEF DESCRIPTION OF THE DRAWINGS

The disclosure may be better understood by reference to the following drawings:

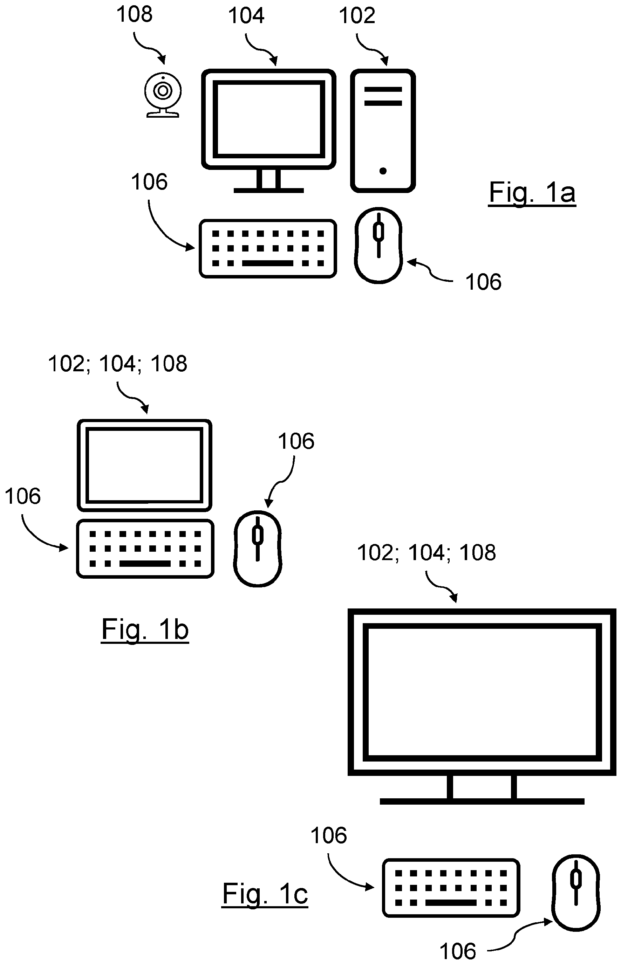

- Fig. 1 a:: A first schematic illustration of a computer device according to embodiments of the present invention.
- Fig. 1 b:: A second schematic illustration of a computer device according to embodiments of the present invention.
- Fig. 1 c:: A third schematic illustration of a computer device according to embodiments of the present invention.
- Fig. 2a:: A schematic illustration of sensor means according to embodiments of the present invention.
- Fig. 2b:: A photographic illustration of sensor means being arranged at a display means of a computer device according to embodiments of the present invention.
- Fig. 3a:: A first schematic illustration of an interaction space according to embodiments of the present invention.
- Fig. 3b:: A second schematic illustration of an interaction space according to embodiments of the present invention.
- Fig. 4a:: A first schematic illustration of a computer device including a first type of sensor means according to embodiments of the present invention.
- Fig. 4b:: A second schematic illustration of a computer device including a second type of sensor means according to embodiments of the present invention.
- Fig. 5a:: A first photographic illustration of a user's hand using a physical input device according to embodiments of the present invention.
- Fig. 5b:: A second photographic illustration of a user's hand while mimicking use of a physical input device according to embodiments of the present invention.
- Fig. 5c:: A third photographic illustration of a user's hand using a physical input device according to embodiments of the present invention.
- Fig. 5d:: A fourth photographic illustration of a user's hand using a physical input device according to embodiments of the present invention.
- Fig. 5e:: A fifth photographic illustration of a user's hand using a physical input device according to embodiments of the present invention.
- Fig. 6a:: A first photographic illustration of computer device and a user's hand while mimicking use of a physical input device according to embodiments of the present invention.
- Fig. 6b:: A second photographic illustration of computer device and a user's hand while mimicking use of a physical input device according to embodiments of the present invention.
- Fig. 6c:: A third photographic illustration of computer device and a user's hand while mimicking use of a physical input device according to embodiments of the present invention.
- Fig. 6d:: A fourth photographic illustration of computer device and a user's hand while mimicking use of a physical input device according to embodiments of the present invention.
- Fig. 6e:: A fifth photographic illustration of computer device and a user's hand while mimicking use of a physical input device according to embodiments of the present invention.
- Fig. 7a:: A first photographic illustration of a user's hand using a physical input device according to embodiments of the present invention.
- Fig. 7b:: A second photographic illustration of a user's hand using a physical input device according to embodiments of the present invention.
- Fig. 7c:: A third photographic illustration of a user's hand while mimicking use of a physical input device according to embodiments of the present invention.
- Fig. 7d:: A fourth photographic illustration of a user's hand while mimicking use of a physical input device according to embodiments of the present invention.

### DETAILED DESCRIPTION

Figure 1a illustrates a first embodiment in which the computer device 102 is a personal computer. The computer 102 is coupled to a display means 104 in the form of a computer monitor, to physical input devices 106, including a keyboard and a mouse, and to sensor means 108.

Figure 1b illustrates a second embodiment. The embodiment of figure 1b differs from the embodiment of figure 1a in that the computer device 102 is a tablet with integrated display means 104 and sensor means 108.

Figure 1c illustrates a third embodiment in which the computer device 102 is integrated into a television set which also comprises the display means 104 and the sensor means 108.

It shall be mentioned that the concepts disclosed herein may also be practiced in other embodiments in various configurations, e.g., with integrated or external display means 104, physical input devices 106 and/or sensor means 108.

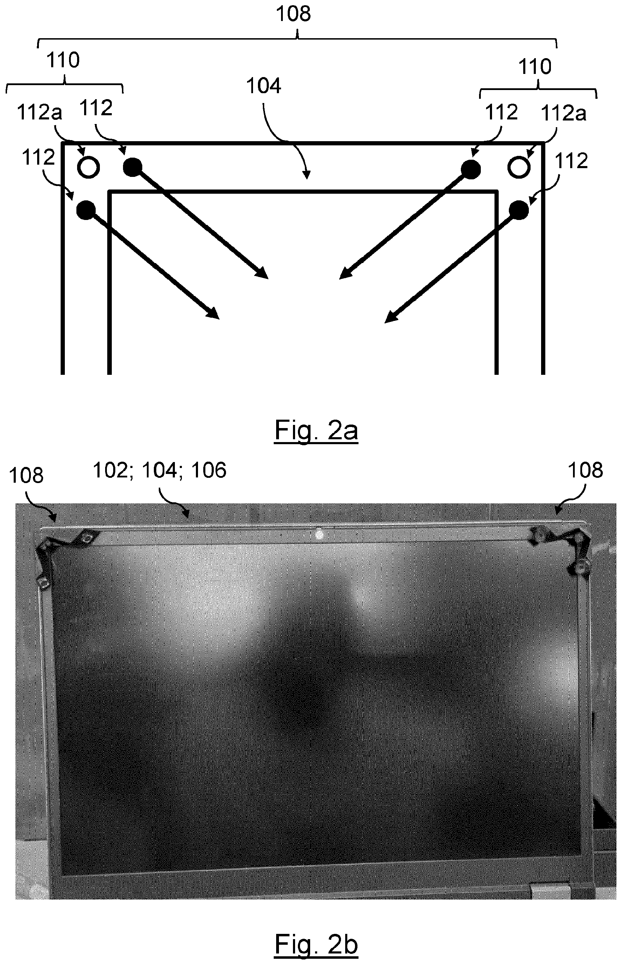

Figure 2a illustrates sensor means 108 in an embodiment of the present invention. Said sensor means 108 comprises two sensor arrays 110. Each sensor array 110 comprises a viewing direction which is depicted by arrows. As can be seen from the pointing direction of the arrows, the fields of view of the sensor arrays 110 extend at least partly across the display means 104 from a left side to a right side and/or vice versa with respect to an orientation of the display means 104 during usage. Each sensor array comprises two sensor devices 112 which may be infrared cameras or RGB-cameras and one projector 112a which may be an infrared laser projector 112a. The projector 112a may project a pattern being capturable by the sensor devices 112 and configured to support the sensor devices 112 to capture sensor data, in particular depth information. The projectors 112a are respectively arranged in upper corners of the display means 104, in particular at a framing of the display means 104. Accordingly, the sensor devices 112 are respectively arranged essentially in said upper corners.

Figure 2b, compared to figure 2a, is a photographic illustration of a sensor means 108. As in the schematic illustration of figure 2a, the sensor means 108 includes two sensor arrays 110, each comprising a projector 112a and two sensor devices 112.

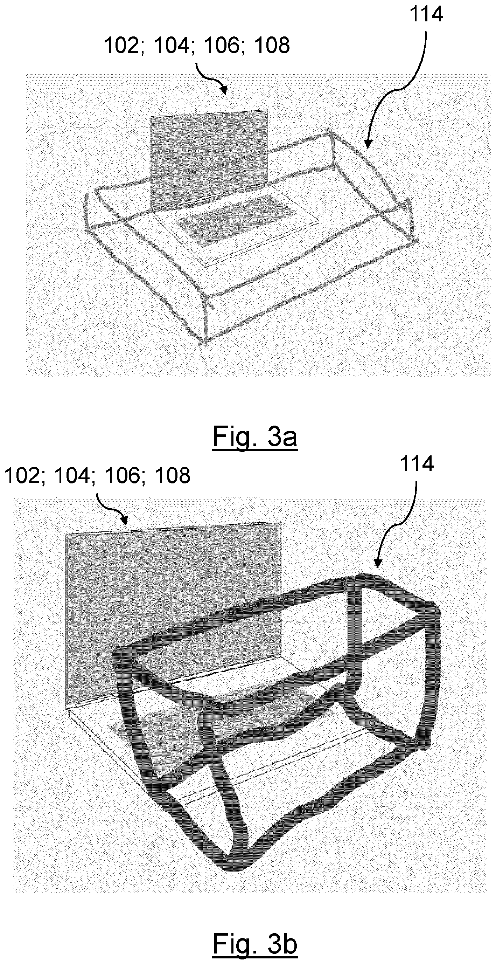

Figures 3a and 3b illustrate exemplary conceptual views of an interaction space 114. As can be seen, the interaction space 114 is essentially arranged including the nearfield of the computer device 102. The interaction space 114 is a space which is observed by the sensor means 108. This way, movements within the interaction space 114 can be determined and used according to embodiments of the present invention.

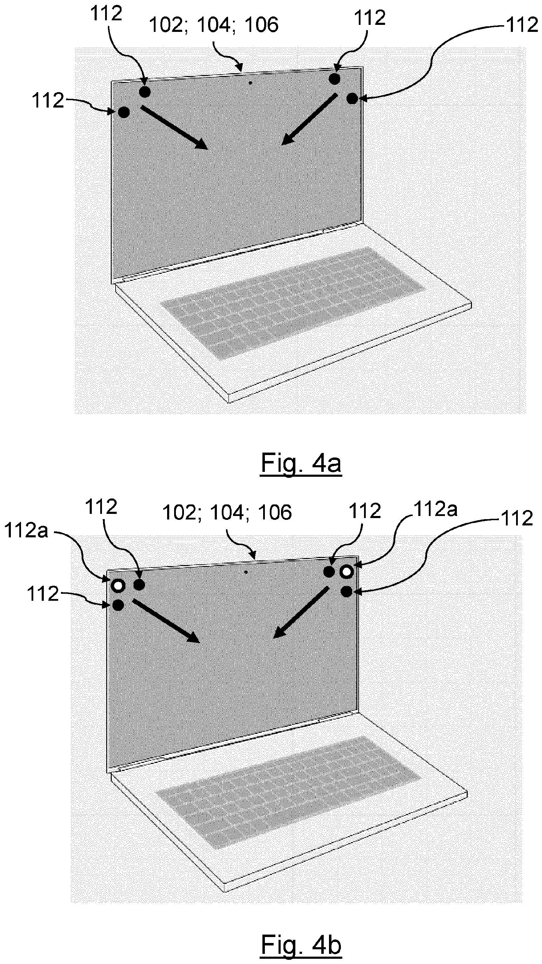

Figure 4a is a first schematic illustration of a computer device 102 being a laptop device. Thus, the computer device 102 comprises a display means 104 and several physical input devices 106. Further, the computer device 102 comprises sensor means 108 including two sensor arrays 110 each having two sensor devices 112.

Figure 4b is a second schematic illustration of a computer device 102, similar to figure 4a. Other than figure 4a, each sensor array 110 further comprises a projector 112a.

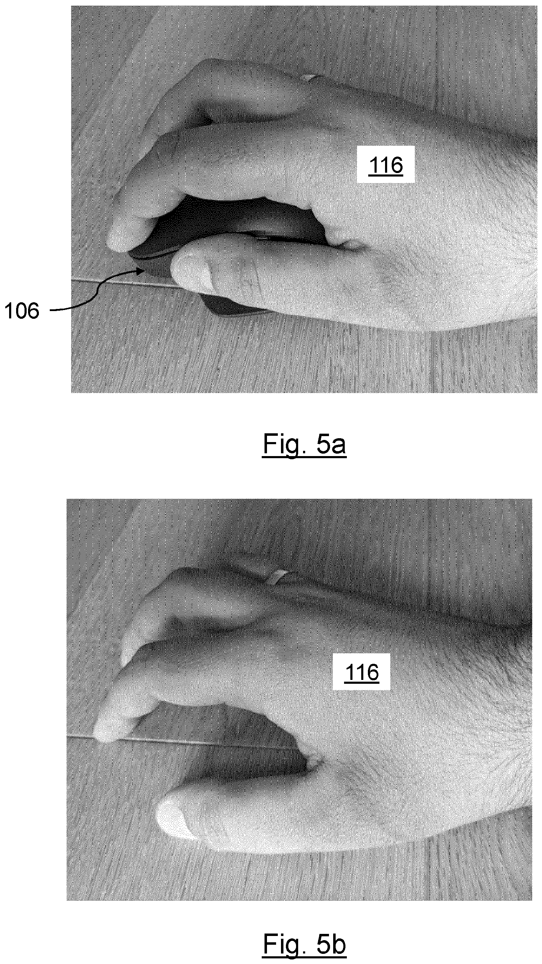

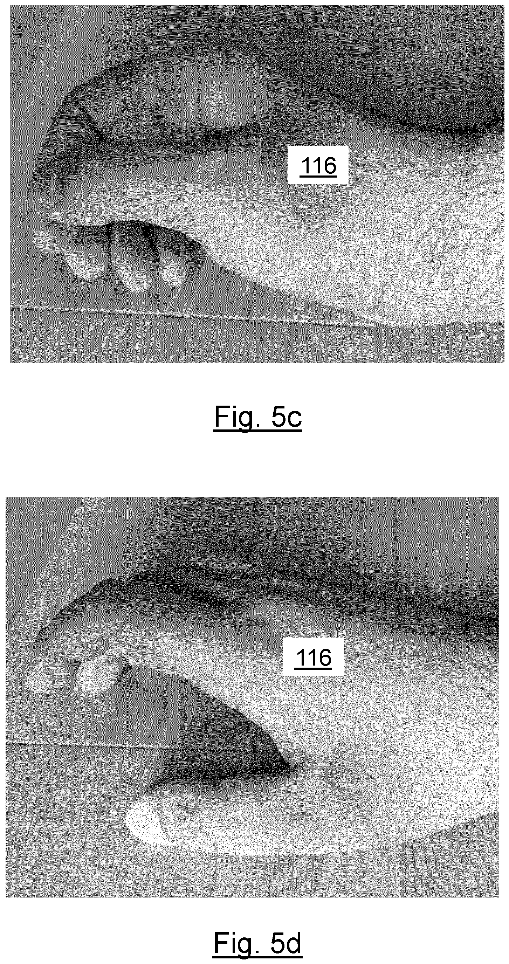

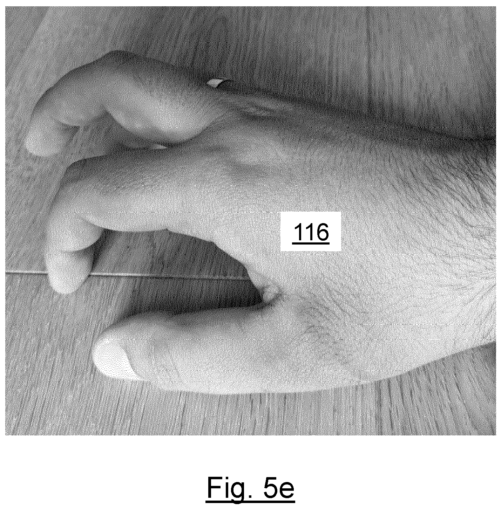

Figure 5a is a photographic illustration of a user's hand 116. The user's hand 116 uses a physical input device 106 being a traditional computer mouse. In figure 5b, the physical input device 106 being a computer mouse replaced by a method according to embodiments of the present invention. Thus, the user's hand 116 mimics a use of a computer mouse without actually using a physical input device 106, i.e., a computer mouse. In figure 5c, a particularly ergonomic orientation of the user's hand 116 is illustrated, namely a vertical orientation corresponding to the orientation of a user's hand 116 when using a so-called vertical mouse. In figure 5d, the user's hand 116 performs a left click using the respective index finger. In figure 5e, the user's hand 116 performs a right click user the respective middle finger.

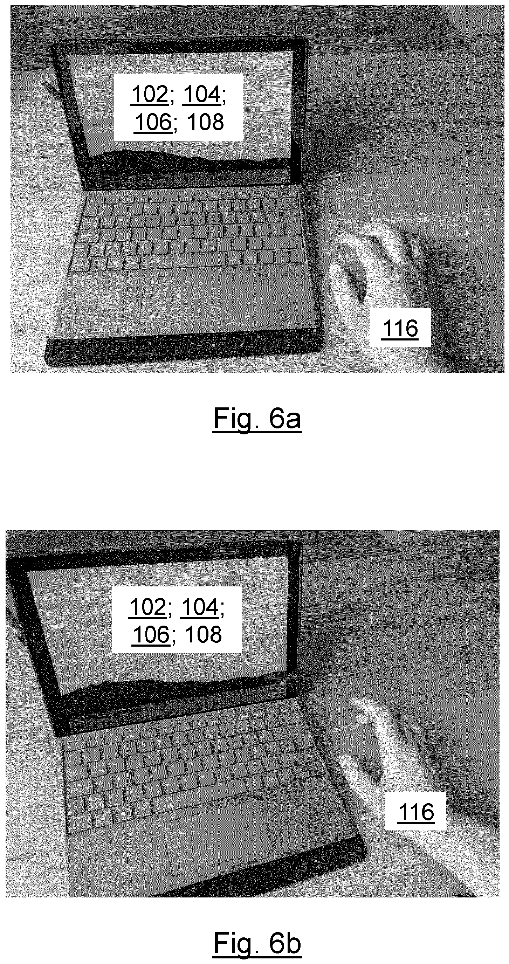

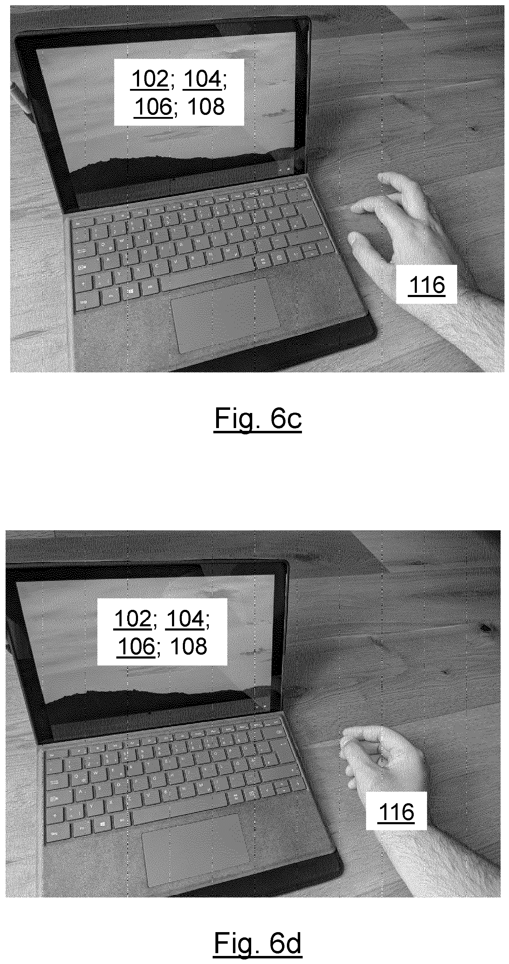

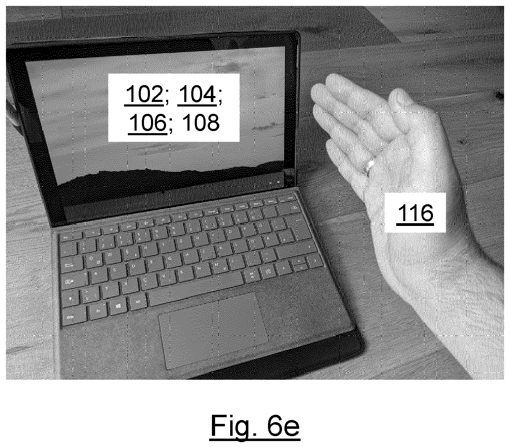

Figure 6a is a photographic illustration of a computer device 102 and a user's hand 116 providing user input according to embodiments of the present invention, in particular including causing a movement of a mouse pointer. In figure 6a, the user's hand 116 performs a left click. In figure 6b, the user's hand 116 performs a right click. In figure 6d, the user's hand 116 is in a particularly ergonomic orientation similar to the illustration of figure 5c. In figure 5e, the user's hand 116 performs a free space gesture causing a swiping and/or scrolling operation.

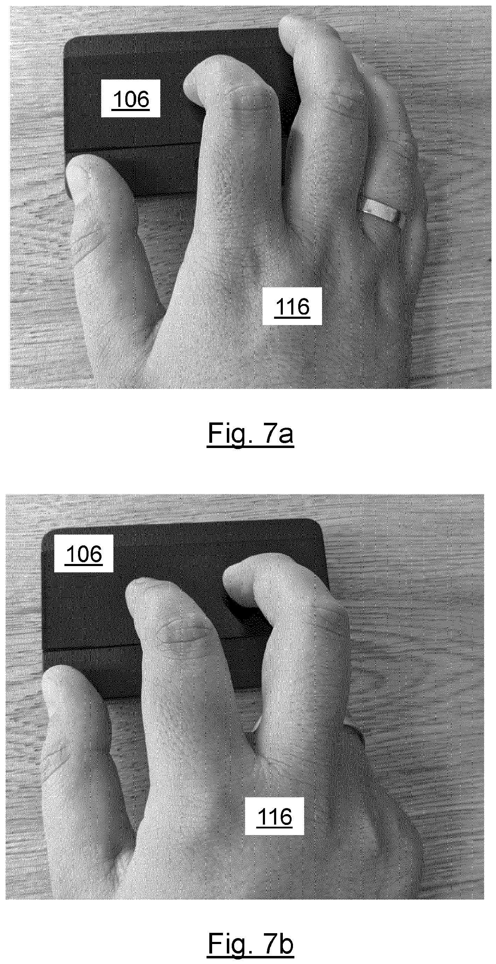

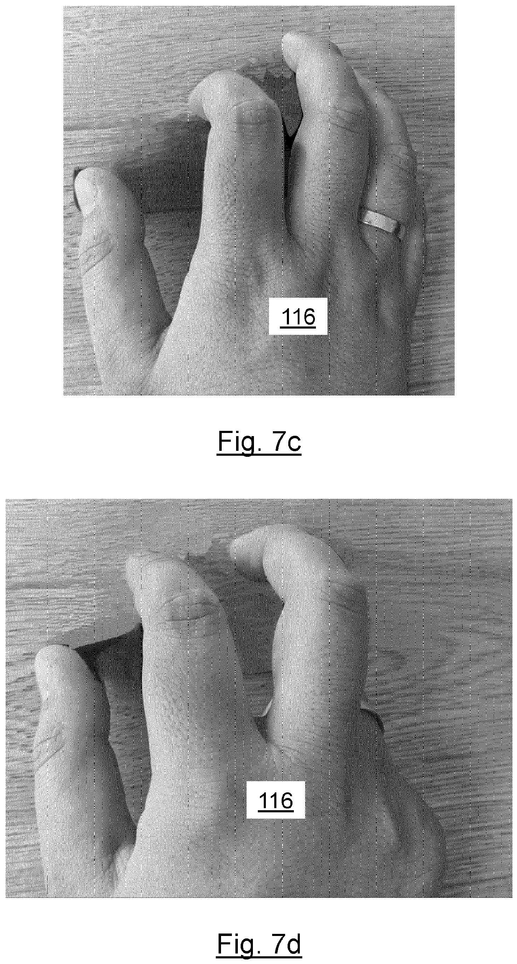

Figures 7a and 7b are photographic illustrations of a user's hand 116 while using a physical input device 106 being a touchpad. Compared to each other, in figure 7a a single finger input is provided while in figure 7b, a multi finger input is provided. Accordingly, figures 7c and 7d show a situation in which using of a physical input device 106 is replaced by a method according to embodiments of the present invention.

### Machine Learning

Certain embodiments of the invention may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g., sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g., a classification algorithm, a regression algorithm or a similarity learning algorithm). Classification algorithms may be used when the outputs are restricted to a limited set of values (categorical variables), i.e., the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters. Reinforcement learning is a third group of machine-learning algorithms that may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e., outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g., a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g., based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g., of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e., support vector networks) are supervised learning models with associated learning algorithms that may be used to analyze data (e.g., in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

### General aspects

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE SIGNS

- 102: computer device
- 104: display means
- 106: physical input device
- 108: sensor means
- 110: sensor array
- 112: sensor device
- 112a: projector
- 114: interaction space
- 116: user's hand

## Claims

1. A method for emulation of a physical input device (106) for touchless control of a computer device (102), wherein the computer device (102) comprises and/or is communicatively coupled to sensor means (108), the sensor means (108) being configured for observing an interaction space (114) in which user interaction is intended to occur for controlling the computer device (102), the method comprising:
determining, based at least partially on sensor data captured using the sensor means (108), at least one characteristic of a user's hand (116) while the user mimics use of a physical input device (106) at least partially within the interaction space (114); and
generating at least one control command that corresponds to an input command that would have been generated if the user would have used the physical input device (108), at least based on the at least one determined characteristic of the user's hand (116).

2. The method of claim 1, the method further comprising:
observing, using the sensor means (108), the interaction space (114) being at least partially located at a location where user interaction with a computer mouse normally takes place, preferably next to a keyboard associated with the computer device (102), more preferably adjacent and/or at least partially encompassing a virtual plane defined in space.

3. The method of any one of the preceding claims, wherein the determined at least one characteristic of the user's hand (116) includes position and/or movement of the user's hand (116) within the interaction space (114), in particular parallel to a virtual plane defined in space, and/or motion of at least one individual finger of the user's hand (116).

4. The method of claim 3, wherein the at least one control command causes emulation of at least one mouse-functionality based at least partially on the position and/or movement and/or motion, preferably wherein generating the at least one control command is performed in a mouse emulation mode.

5. The method of claim 4, wherein emulation of at least one mouse-functionality includes one or more of:
manipulating a position of a pointer, in particular a mouse pointer or user interface pointer, on a displayed scene, wherein the position and/or movement of the displayed pointer depends on the determined position and/or movement of the user's hand (116) essentially parallel to the virtual plane and/or depends on the determined motion of at least one individual finger of the user's hand (116), and/or
executing a click operation, in particular depending on the determined motion of at least one individual finger of the user's hand (116), and/or
executing a scroll operation depending on the determined position and/or movement of the user's hand (116) essentially parallel to the virtual plane and/or depending on the determined motion of at least one individual finger of the user's hand (116); and/or
executing a swipe operation depending on the determined position and/or movement of the user's hand (116) essentially parallel to the virtual plane and/or depending on the determined motion of at least one individual finger of the user's hand (116).

6. The method of any one of the preceding claims, the method further comprising:
detecting the presence of the user's hand (116) within the interaction space (114) and at least one reference attribute and/or reference portion of the user's hand (116) based at least partially on the captured sensor data;
locking, preferably upon a trigger action of the user, the user's hand (116) based on the at least one reference attribute and/or reference portion, wherein one or more of the following is performed:
re-detecting the user's hand (116) based on the at least one reference attribute and/or reference portion in order to facilitate further interaction seamlessly in the event that the user removes the hand (116) from the interaction space (114) and subsequently reintroduces the hand (116) into the interaction space (114), and/or
filtering objects in the interaction space (114) that do not correspond to the user's hand (116), wherein filtering is performed based on the at least one reference attribute and/or reference portion of the user's hand (116).

7. The method of any one of the preceding claims, the method further comprising:
displaying, using a display means (104), a visual control aid being visually perceptible by the user,
optionally, wherein the visual control aid provides the user with an indication of a position of the user's hand (116) and/or movement of the user's hand (116) and/or motion of at least one finger of the user's hand (116),
optionally, wherein the visual control aid includes a visually perceptible virtual representation of the user's hand (116), the virtual representation preferably having the shape of a hand,
optionally, wherein the visual control aid includes a visually perceptible virtual representation of at least part of the interaction space (114), wherein an indication of a position of the user's hand (116) and/or movement of the user's hand (116) and/or motion of at least one finger of the user's hand (116) is indicated with respect to the virtual representation of the interaction space (114); and/or
projecting, using a projector, a visual indication providing the user at least partially with an indication of the position and/or size of the interaction space (114).

8. The method of any one of the preceding claims, the method further comprising:
recording, using a microphone, voice input of the user and generating at least one voice-based control command,
optionally wherein the at least one voice-based control command is related to the emulation of at least one mouse-functionality and/or gesture interaction, and/or the at least one voice-based control command is supplementary commands facilitating further functionalities of the computer device (102) if combinedly detected with the at least one characteristic, preferably position, movement and motion, of the user's hand (116).

9. The method of any one of the preceding claims, the method further comprising:
switching, upon detecting a trigger event, in particular performed by the user, into a gesture interaction mode configured to detect free space gestures, optionally wherein the trigger event is predetermined and/or adjustable by the user;
generating, in the gesture interaction mode, at least one control command based on at least one characteristic of the user's hand (116), preferably based on movement of the user's hand (116) and/or motion of at least one individual finger within the interaction space (114), wherein the at least one control command causes the computer device (102) to perform actions associated with the detected free space gestures;
optionally switching back to the mouse emulation mode upon a trigger event and/or automatically after expiry of a period of time in which no free space gesture was detected, the period of time preferably being predetermined and/or adjustable by the user;
optionally, wherein gesture classification is performed using a gesture classifier which is executed by the computer device, wherein gesture classification includes determining the type of a gesture based on a gesture database including at least one of the following gesture types: open or close the start menu, close window, show desktop, open the file explorer, start voice input, lock computer, minimize all windows, maximize window, open settings, open notification center, open calendar, lock device orientation, take a screenshot, toggle between apps on the taskbar, open the screen magnifier, zoom in, zoom out, open specific app.

10. The method of any one of the preceding claims,
wherein the sensor means (108) at least includes two cameras of the same type, preferably two 2D-cameras, more preferably two infrared cameras, having an overlapping field of view and preferably being arranged spaced apart from each other;
optionally wherein the sensor means (108) further includes an infrared laser projector (112a) projecting an infrared laser pattern configured to support the sensor means (108) to capture sensor data, in particular depth information;
optionally wherein at least one of the cameras is oriented to have a field of view being oriented essentially downwards, in particular with respect to the direction of gravity.

11. The method of any one of the preceding claims,
wherein the computer device (102) comprises a display means (104) being configured to display a scene to the user,
wherein the sensor means (104) includes at least one, preferably two, sensor device(s) (108), wherein at least one of the at least one sensor device(s) (108) having a field of view extending at least partly across the display means (104) from a left side to a right side and/or vice versa with respect to at least one orientation of the display means (104) during usage;
and/or
wherein the sensor means (108) includes at least one, preferably two, sensor device(s) (112), wherein at least one of the at least one sensor device(s) (112) is oriented having a field of view covering at least part of a spatial area in front of the display means (104), preferably the spatial area being located between the user and the display means (104);
and/or
wherein the sensor means (108) is arranged at or integrated in an edge area of the display means (104), the sensor means (108) including at least one, preferably two, sensor device(s) (112), wherein at least one of the at least one sensor device(s) (112) is oriented having a field of view covering an opposing part of the display frame.

12. A data processing apparatus, preferably an electronic device, more preferably a computer device (102), comprising means for carrying out the method of any one of claims 1-11.

13. A system, comprising:
a computer device (102) configured to receive and process sensor data;
sensor means (108), preferably including at least one sensor device (112), wherein the sensor means (108) is configured for observing an interaction space (114) in which user interaction is intended to occur for controlling the computer device (102), wherein the computer device (102) comprises and/or is communicatively coupled to the sensor means (108);
wherein the computer device (102) comprises means for and is configured for carrying out a method of any one of claims 1-11
optionally wherein the computer device (102) comprises one or more of a processor, a non-transitory memory and/or a display means (104);
optionally wherein the computer device (102) comprises and/or is communicatively coupled to a microphone;
optionally wherein the computer device (102) comprises a folding mechanism;
optionally wherein the computer device (102) comprises and/or is communicatively coupled to a keyboard;
optionally wherein the computer device (102) comprises a housing having integrated therein the sensor means (108);
optionally wherein the sensor means (108) comprises at least two sensor devices (112), the at least two sensor devices (112) being cameras of the same type, preferably two 2D-cameras, more preferably two infrared cameras, having an overlapping field of view and preferably being arranged spaced apart from each other, wherein at least one, preferably each, of the sensor devices (112) is oriented to have a field of view being oriented essentially towards a bottom part of a display means (108) of the computer device (102);
optionally wherein the computer device (102) comprises and/or is communicatively coupled to an infrared laser projector (112a) configured to project an infrared laser pattern which is capturable by an infrared camera.

14. A sensor means (108), preferably including at least one sensor device (112), more preferably including at least two sensor devices (112), configured for use in a method according to any one of claims 1-11 and/or in a system according to claim 13.

15. A computer program or a computer-readable medium having stored thereon a computer program, the computer program comprising instructions which, when the program is executed by a computer, cause the computer to carry out the method of any one of claims 1-11.
